# EUROPEAN PATENT APPLICATION

(11) **EP 4 702 899 A1**
(43) Date of publication of application: **04.03.2026**
(21) Application number: 25197347.5
(22) Date of filing: 21.08.2025
(51) Int. Cl.: A47J 43/046, A47J 43/07

(54) **BLENDER CONTAINER WITH CHILD HAND GUARD**

(30) Priority: 28.08.2024 US 202463687911 P; 18.08.2025 US 202519303215
(71) Applicant: Capbran Holdings, LLC, Los Angeles, California 90024 (US)
(72) Inventor: Finnance,, Robert, Los Angeles, 90024 (US)
(74) Representative: Hellmich, Wolfgang

(57) **Abstract**

A portable blender apparatus having a hand guard includes a motor base having a control for controlling the operations of a blade assembly coupled to the motor base. A container for the portable blender has a proximal portion which couples to the motor base, and a distal portion away from the motor base. The distal portion is configured with an attachment mechanism for receiving a removable lid, which may be used to seal material in the container. The distal portion includes a plate guard, which is a substantially planar member extending inward from an outer circumference of the distal portion. The plate guard has an aperture of reduced circumference relative to the distal portion, and the aperture is separated from the blade assembly a predetermined distance.

## Description

### FIELD OF THE INVENTION

The present invention relates to blenders and portable blenders for personal use. More specifically, the present invention relates to a portable blender for personal use having a drink-through lid and vessel having a child hand guard.

### BACKGROUND

Blenders are well known in the art, as are hand-held portable battery powered blenders designed for personal use. Portable blenders typically comprise a container vessel portion to contain a product to be blended, and for housing and dispensing the blended product, and a motor base which contains a battery powered motor, blade assembly, and controls for operating the blender. In some configurations, a lid is included on the container opposite the base with a 2 spout for dispensing blended contents, and which may include a handle for carrying the blender. Such a lid it typically removable, or at minimum includes an aperture for consuming blended components directly from the container.

Portable blenders include safety mechanisms to prevent motor activation of the blade assembly when the container is not properly installed on the motor base, to avoid injury from the blade assembly. Safety mechanisms that prevent motor activation when the container is not properly connected are typically located on the motor base and/or on the lip of the container. These may be pressure switches adjacent the threads of the motor base that are depressed by the lip of the container when tightened onto the base. In other configurations, the safety mechanism may be magnetic, wherein detection of a magnetic field is required to allow motor activation. This also relies on a proximity of the container to the motor base.

One problem with portable blender removable lids is that the lid is typically only connected to the container using a threaded attachment. This allows the lid to be removed while the container is properly affixed to the motor base, thereby allowing the blade assembly to activate with the lid removed or open. Although the container is elongated and narrow, such that an adult's fingers or hand cannot generally reach the blades, a child could potentially reach into the container through an open top while the blade assembly is spinning, and cause injury.

For these reasons it is an object of the present invention to provide a personal portable blender which limits access to the container portion when container is connected to the motor base, with the lid is open or removed from the container. A further object is to provide a personal portable blender providing easily openable and closeable access to the inside of the container allowing liquids to be poured into and from the container while restricting access to the container interior by small fingers, hands, or arms. Yet another object of the invention is to provide 3 a personal portable blender having a safety opening that operates in concert with a specialized lid opening, to allow free and easy dispensing of the container contents, without having to remove the container from the motor base. These and other objects are more fully described in the following specification and illustrations.

### SUMMARY

A portable blender has a hand guard incorporated therein. In one implementation, the portable blender includes a motor base with a control for controlling the operations of a blade assembly. A container having a proximal portion is configured to couple to the motor base. The container also has a distal portion, which is configured with an attachment mechanism for receiving a removable lid. The distal portion also has a plate guard. The plate guard is formed as a substantially planar member extending inward from an outer circumference of the distal portion. To provide access to the container, while preventing a user from accessing the blade assembly, the plate guard comprising an aperture of reduced circumference relative to the distal portion, separated from the blade assembly by a predetermined distance.

The aperture may be surrounded by the plate guard. Alternatively, the aperture may be formed against the distal portion, such that it is bounded by the distal portion and by the plate guard. Thus, the aperture may form a "mouth" of the container through which material may be decanted. The aperture may also be centered over the blade assembly.

The distal portion may comprise a threaded engagement with the lid, such that the lid can be screwed on and off the container. The lid may also have a hinged portion such that the lid can be opened while attached to the container. Likewise, the proximal portion may comprise a threaded engagement with the motor base, thus, allowing the container to be installed on, and 4 removed from the motor base.

In various other implementations the plate guard is transparent to facilitate viewing the contents of the container. The plate guard may be ultrasonically welded to the distal portion. Alternatively, the plate guard and the container form a unitary molded structure. The predetermined distance between the plate guard and to the blade assembly is preferably four inches or more.

In another implementation a hand guard apparatus is provided for a portable blender. The hand guard includes a substantially planar plate guard defining an aperture. The plate guard is mounted at a distal portion of a container, and the container also has a proximal portion configured to couple to a motor base. The motor base includes a control for controlling the operations of a blade assembly which is oriented toward the proximal end. The distal portion has an attachment mechanism for receiving a removable lid, and configured to seal the container. The planar member preferably extends inward from an outer circumference of the distal portion, such that the aperture is of reduced circumference relative to the distal portion, and the lid seals the aperture within the container.

The aperture may be surrounded by the plate guard, or it may be bounded by the distal portion and by the plate guard. The aperture may also be centered over the blade assembly. The distal portion preferably comprises a threaded engagement with the lid. The proximal portion may comprise a threaded engagement with the motor base. In some implementations, the plate guard may be transparent, may be ultrasonically welded to the distal portion, or the plate guard and the container may form a unitary molded structure. The predetermined distance from the plate guard to the base is preferably four inches or more.

### BRIEF DESCRIPTION OF THE FIGURES

FIG. 1 illustrates a perspective view of a portable cordless blender having a motor base and a container vessel with a container lid removed.
FIG. 2 illustrates a top plan view of the portable cordless blender with the lid removed from the container.
FIG. 3 illustrates a cut-away elevation view of the portable cordless blender, including the operational components of the blender motor base.
FIG. 4 illustrates a top perspective view of the lid for the portable cordless blender in an open configuration.
FIG. 5 illustrates a top plan view of the lid for the portable cordless blender in an open configuration.
FIG. 6 illustrates a series of portable cordless blenders having different embodiments of a child hand guard.

### DESCRIPTION

The present invention is described more fully hereinafter, but not all embodiments are shown. While the invention has been described with reference to exemplary embodiments, it will be understood by those skilled in the art that various changes may be made, and equivalents may be substituted for elements thereof without departing from the scope of the disclosure. In addition, many modifications may be made to adapt a particular structure or material to the teachings of the disclosure without departing from the essential scope thereof.

The drawings accompanying the application are for illustrative purposes only. They are not intended to limit the embodiments of the present application. Additionally, the drawings 6 are not drawn to scale. Common elements between different figures may retain the same numerical designation.

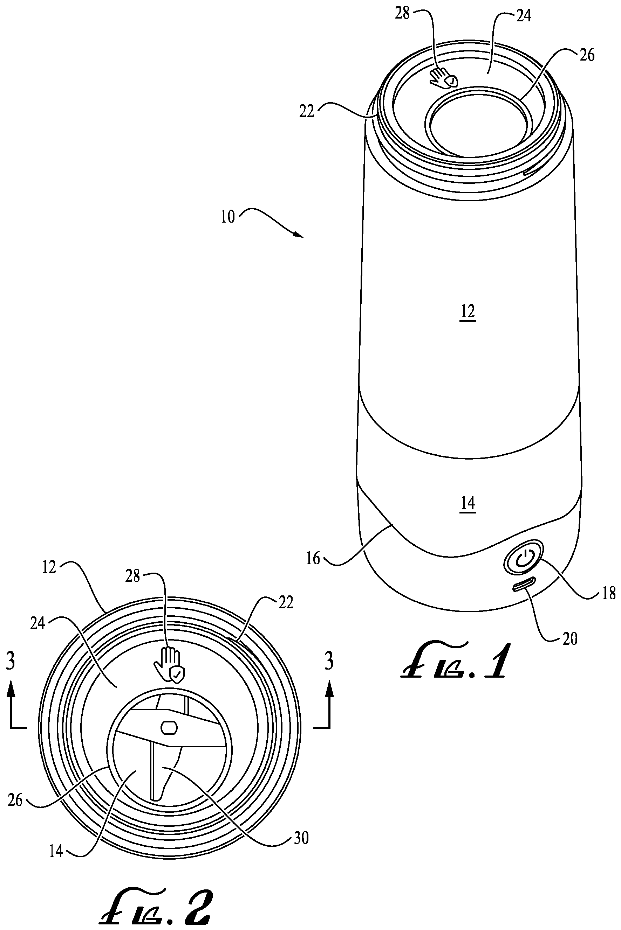

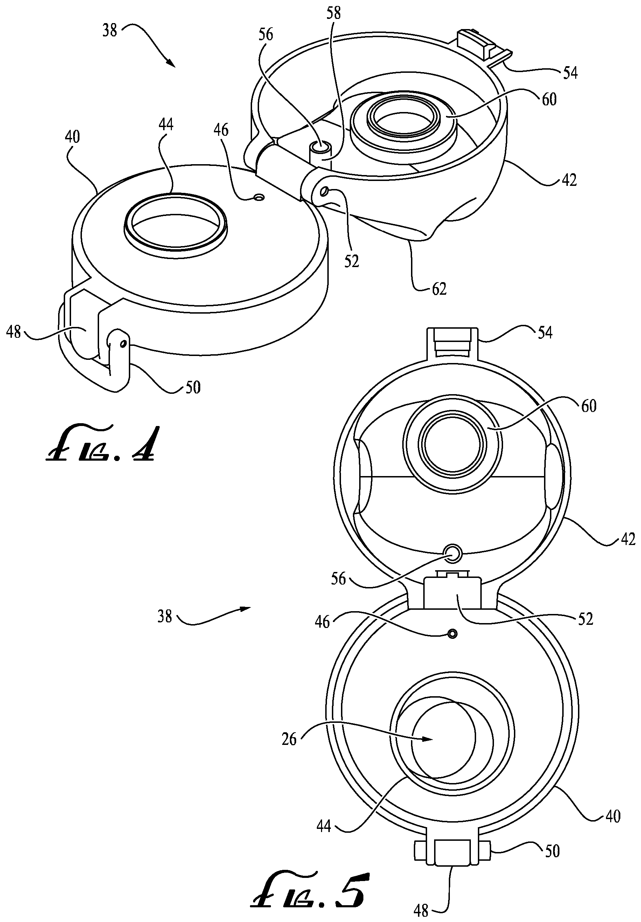

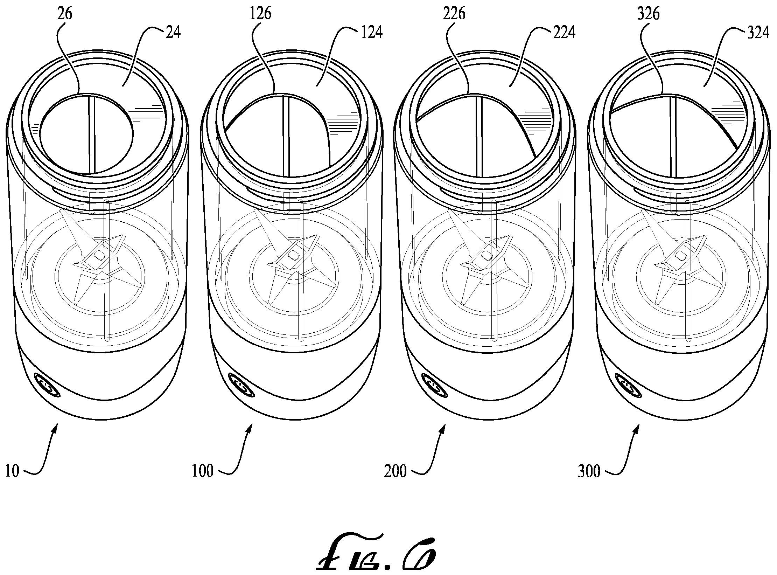

Referring to FIG. 1 a portable blender 10 is shown, having a container 12 and a motor base 14. A housing seam 16 may be present on the motor base 14 for assembly. The motor base 14 preferably includes a control button 18 for controlling the operations of the blender 10, and a power interface 20 for charging the blender 10. The container 12, opposite its connection to the motor base 14, includes a threaded top 22 to which a lid 38 (FIGS. 5 and 6) can be affixed. Inward of the threaded top 22 is a plate guard 24, which preferably comprises a thin plate-like piece of material.

The plate guard 24 may be made of any sufficiently resilient material. In some instances, where the container 12 is made of a plastic material, such as Tritan^{®}, the plate guard 24 may be made of the same material. In preferred embodiments, the container 12 and the plate guard 24 are made of a transparent material, enabling users to see the container 12 contents, and to clean the container 12. In yet another embodiment, the plate guard 24 is ultrasonically welded to the container 12 adjacent the threaded top 22.

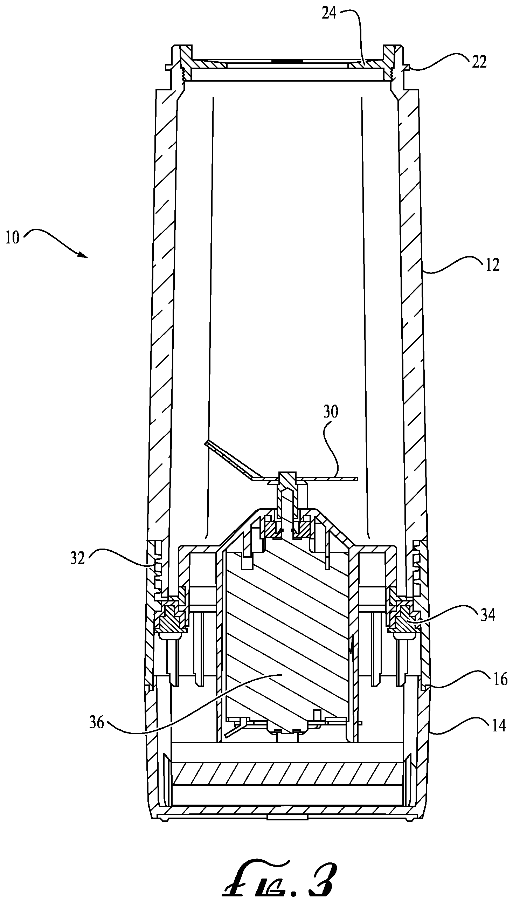

Still referring to FIG. 1, in order to access the interior of the container 12, and to dispense the contents of the container 12 after blending (or to introduce material into the container 12), an aperture 26 is provided in the plate guard 24. The aperture 26 is preferably approximately one inch to an inch and a half in diameter, such that a person cannot insert their hands or fingers sufficiently far into the container 12 to contact the spinning blade assembly 30 (FIGS. 2 and 3). In various embodiments, an indicium 28 may be placed on the plate guard 24 adjacent to the aperture 26 to indicate the purpose of the plate guard 24 and that users should not insert their fingers into the container 12 through the aperture 26. In one embodiment, the indicia 28 is embossed directly 7 into the surface of the plate guard 24.

Referring to FIG. 2, The container 12 is shown from above, affixed to the motor base 14, with the threaded portion 22, the plate guard 24, the aperture 26, and the indicia 28 shown. In this view, the blade assembly 30 and the motor base 14 can be seen through the aperture 26. Due to the narrow size of the aperture 26, a user cannot come into contact with the blade assembly 30. Additionally, the aperture 26 is preferably formed off-center, and close to the threaded portion 22, thereby creating a preferred direction of pour for decanting liquids (not shown) from the container 12. Referring to FIG. 3, the blender 10 is shown in cut-away view with the container 12 attached to the motor base 14. The container 12 has a bottom threaded engagement 32 for engaging the motor base 14, and urging the container against switches 34 that activate the motor 35 and spin the blade assembly 30. As illustrated, the plate guard 24 is more than four inches above the blade assembly 30, thereby preventing any users from touching the blade assembly 30 when the container 12 is installed on the motor base 14, particularly when the switches 34 are depressed and the motor 36 activated.

Referring to FIG. 4, the lid 38 of the portable blender 10 is shown. The lid 38 includes a bottom portion 40, which attaches to the container 12 using a the threaded top 22, and a top portion 42 for sealing the lid 38 closed. The bottom portion 40 includes a portal 44, which aligns with the aperture 26, to promote dispensing contents from the container 12. In one embodiment, the portal 44 is slightly smaller than the aperture 26. In other embodiments, it may be larger. The bottom portion 40 also includes an air vent 46 for allowing pressure in the container 12 to equalize as the container 12 is emptied. A latch 48 is provided for holding the lid 38 closed, and a safety lock 50 is provided to prevent inadvertent opening of the lid 38. 8

The top portion 42 is connected to the bottom portion 40 by a hinge 52, which in one preferred embodiment is biased to urge the lid 38 into the open position. A hook 54 is provided, which engages the latch 48, when the lid 38 is closed. The safety lock 50 swings up and over the hook 54 in order to hold the lid 38 in a closed configuration. A stopper 56 is provided on a stem 58 to seal the air vent 46 when the lid 38 is closed, and a gasket 60 is provided for sealing that the portal 44 when the lid 38 is closed. In one preferred embodiment, a handle 62 is formed as part of the top portion 42, enabling a user to carry the personal blender 10 by the lid 38 when the lid 38 is closed and latched, preferably with the safety lock 50 engaged.

Referring to FIG. 5, the lid 38 is shown with the portable blender 10 attached, although generally not visible from above. In the illustrated embodiment, the aperture 26 is shown coming into alignment with the portal 44 of the lid 38. In the illustrated embodiment, there is a thirty four degree aperture-to-portal alignment tolerance. The aperture 26, as illustrated, is substantially one inch in diameter, and the portal 42 is substantially 1.5 inches in diameter. In other embodiments, the portal 42 may be smaller than the aperture 26, or of equal size.

Referring to FIGS. 1-5, in the illustrated embodiment, a plate guard 24 having a circular aperture 26 is shown, which corresponds to the portal 44 on the lid. The aperture 26 and portal 44 are shown as offset from center. It should be understood that in various embodiments, other shapes and positions of the aperture 26 are contemplated. For example, an alternative aperture might be of a different shape, or be placed in a different position relative to the portable blender 10. Similarly, the plate guard 24 may be made in a variety of different configurations. In some alternative embodiments, the lid may be removable without a portal, or may be omitted altogether. For example, an alternative plate guard might extend entirely across the top opening 9 of the container, with a plurality of openings, thereby forming a grate-like structure through which liquids can be decanted, but which prevents users inserting hands or fingers into the container. In other embodiments, the plate guard may be installed at an angle to help obscure an aperture or apertures present therein. Any container having an open bottom portion for connecting a motor base and inserting a blade assembly into the container, with a top portion having an opening through which blended contents may be poured, but which is sufficiently closed off to prevent ingress a user's hand or fingers is contemplated.

Various exemplary embodiments of the plate guard 24 and aperture 26 are shown in FIG. 6. Portable blender 10 has the plate guard 24 and aperture 26 as discussed in FIGS. 1-5 above. In alternative embodiment portable blender 100, the plate guard 124 has an aperture 126, which has been opened to the edge of the plate guard 126, such that the widest part of the aperture 126 is substantially two inches (50.8 mm) across. In alternative embodiment portable blender 200, the plate guard 224 has an aperture 226 which has been further opened, such that the widest part of the aperture 226 is substantially 2.125 inches (53.9 mm) across. In alternative embodiment portable blender 300, the plate guard 324 has an aperture 326 which has been yet further opened, such that the widest part of the aperture 326 is substantially 2.25 inches (57.15 mm) across.

### Reference number list

- 7: embossed directly
- 9: top opening
- 10: blender
- 12: container
- 14: motor base
- 22: threaded top
- 24: plate guard
- 26: aperture
- 28: indicium
- 30: spinning blade assembly
- 32: bottom threaded engagement
- 34: container against switches
- 35: motor
- 36: motor
- 38: lid
- 40: bottom portion
- 42: top portion
- 44: portal
- 46: air vent
- 48: latch
- 50: safety lock
- 52: hinge
- 54: hook
- 56: stopper
- 58: stem
- 60: gasket
- 62: handle
- 100: alternative embodiment portable blender
- 124: plate guard
- 126: aperture
- 200: alternative embodiment portable blender
- 224: plate guard
- 226: aperture
- 300: alternative embodiment portable blender
- 324: plate guard
- 326: aperture

## Claims

1. A portable blender (10) apparatus having a hand guard, the apparatus comprising:
a motor base (14) having a control for controlling the operations of a blade assembly;
a container (12) having a proximal portion which couples to the motor base (14), and a distal portion;
the distal portion configured with an attachment mechanism for receiving a removable lid (38);
the distal portion comprising a plate guard (24, 124, 224, 324), the plate guard (24, 124, 224, 324) comprising a substantially planar member extending inward from an outer circumference of the distal portion;
the plate guard (24, 124, 224, 324) comprising an aperture (26, 126, 226, 326) of reduced circumference relative to the distal portion; and wherein the aperture (26, 126, 226, 326) is separated from the blade assembly by a predetermined distance.

2. The apparatus of claim 1 wherein the aperture (26, 126, 226, 326) is surrounded by the plate guard (24, 124, 224, 324).

3. The apparatus of claim 1 or 2, wherein the aperture (26, 126, 226, 326) is formed against the distal portion, such that it is bounded by the distal portion and by the plate guard (24, 124, 224, 324).

4. The apparatus of one of the claims 1 to 3, wherein the aperture (26, 126, 226, 326) is centered over the blade assembly.

5. The apparatus of one of the claims 1 to 4, wherein the distal portion comprises a threaded engagement with the lid (38).

6. A hand guard apparatus for a portable blender (10), the apparatus comprising:
a substantially planar plate guard (24, 124, 224, 324) defining an aperture (26, 126, 226, 326);
the plate guard (24, 124, 224, 324) mounted at a distal portion of a container (12), the container (12) further comprising having a proximal portion configured to couple to a motor base (14);
the motor base (14) having a control for controlling the operations of a blade assembly oriented toward the proximal end;
the distal portion configured with an attachment mechanism for receiving a removable lid (38) configured to seal the container (12);
the planar member extending inward from an outer circumference of the distal portion,
such that the aperture (26, 126, 226, 326) is of reduced circumference relative to the distal portion; and wherein the lid (38) seals the aperture (26, 126, 226, 326) within the container (12).

7. The apparatus of claim 6, wherein the aperture (26, 126, 226, 326) is surrounded by the plate guard (24, 124, 224, 324).

8. The apparatus of claim 6 or 7, wherein the aperture (26, 126, 226, 326) is formed against the distal portion, such that it is bounded by the distal portion and by the plate guard (24, 124, 224, 324).

9. The apparatus of one of the claims 6 to 8, wherein the aperture (26, 126, 226, 326) is centered over the blade assembly.

10. The apparatus of one of the claims 6 to 9, wherein the distal portion comprises a threaded engagement with the lid (38).

11. The apparatus of one of the claims above, wherein the proximal portion comprises a threaded engagement with the motor base (14).

12. The apparatus of one of the claims above, wherein the plate guard (24, 124, 224, 324) is transparent.

13. The apparatus of one of the claims above, wherein the plate guard (24, 124, 224, 324) is ultrasonically welded to the distal portion.

14. The apparatus of one of the claims above, wherein the plate guard (24, 124, 224, 324) and the container (12) form a unitary molded structure.

15. The apparatus of one of the claims above, wherein the predetermined distance is four inches or more.
